# EUROPÄISCHE PATENTSCHRIFT

(11) **EP 1 977 130 B1**
(45) Veröffentlichungstag und Bekanntmachung des Hinweises auf die Patenterteilung: **29.12.2010**
(21) Anmeldenummer: 07702697.9
(22) Anmeldetag: 11.01.2007
(51) Int. Cl.: F16D 27/118

(54) **SCHALTKUPPLUNGSANORDNUNG FÜR KRAFTFAHRZEUGGETRIEBE SOWIE VERFAHREN ZUM EIN- BZW. AUSRÜCKEN EINER GANGSTUFE**
CLUTCH ARRANGEMENT FOR MOTOR VEHICLE TRANSMISSION AND METHOD FOR ENGAGING AND DISENGAGING A GEARSPEED
SYSTEME DE TRANSMISSION A PLUSIEURS RAPPORTS POUR TRANSMISSION DE VEHICULE AUTOMOBILE ET PROCEDE D'ENTREE ET DE SORTIE DANS UN RAPPORT DE TRANSMISSION

(30) Priorität: 25.01.2006 DE 102006004125; 16.05.2006 DE 202006008131 U
(43) Veröffentlichungstag der Anmeldung: 08.10.2008
(73) Patentinhaber: GETRAG Getriebe- und Zahnradfabrik Hermann Hagenmeyer GmbH & Cie KG, 74199 Untergruppenbach (DE)
(72) Erfinder: KNOBLAUCH, Daniel, 74199 Untergruppenbach (DE)
(74) Vertreter: Steil, Christian
(86) Internationale Anmeldenummer: PCT/EP2007/000220
(87) Internationale Veröffentlichungsnummer: WO 2007/085348

(56) Entgegenhaltungen:
- EP-A- 1 628 026
- EP-A2- 0 793 034
- EP-B1- 0 700 805
- WO-A-01/63151
- WO-A-86/05850
- WO-A-2004/109136

## Beschreibung

Die vorliegende Erfindung betriff eine Schalkupplungsanordnung für Kraftfahrzeuge gemäß dem Oberbegriff des Anspruches 1 (wie aus der EP-B1-0-700 805 bekannt).

Die vorliegende Erfindung betrifft generell eine Schaltkupplungsanordnung für Kraftfahrzeuggetriebe, zum Verbinden einer Welle mit einem daran gelagerten Drehkörper, insbesondere mit einem Losrad, wobei die Schaltkupplungsanordnung aufweist:
- eine mit der Welle drehfest verbundene Schaltmuffe, die an der Welle zwischen einer Schließstellung und einer Offenstellung axial verschieblich gelagert ist und eine erste Schaltverzahnung aufweist;
- einen mit dem Drehkörper drehfest verbundenen Kupplungskörper, der eine zweite Schaltverzahnung aufweist, in die die erste Schaltverzahnung in Schließrichtung axial eingeschoben werden kann, um den Drehkörper in der Schließstellung mit der Welle zu verbinden; und
- eine Aktuatoranordnung zum axialen Verschieben der Schaltmuffe.

Ferner betrifft die vorliegende Erfindung ein Verfahren zum Einrücken einer Gangstufe eines Getriebes, insbesondere eines Kraftfahrzeuggetriebes, und zwar durch axiales Verschieben einer Schaltmuffe in Bezug auf einen Kupplungskörper, sowie ein entsprechendes Verfahren zum Ausrücken einer solchen Gangstufe.

Schaltkupplungsanordnungen der oben bezeichneten Art sind allgemein bekannt. Sie werden regelmäßig in so genannten Handschaltgetrieben, in automatisierten Schaltgetrieben (ASG) sowie in Doppelkupplungsgetrieben (DKG) verwendet. Schaltkupplungsanordnungen der genannten Art können jedoch auch für andere Verbindungen zwischen einer Welle und einem Drehkörper verwendet werden, beispielsweise zwischen zwei Wellen oder Ähnlichem.

Der Kupplungskörper mit der zweiten Schaltverzahnung kann separat von dem Drehkörper ausgebildet und mit diesem fest verbunden sein. Alternativ ist es auch möglich, den Kupplungskörper einstückig mit dem Drehkörper auszubilden.

Bei den Aktuatoranordnungen kennt man hydraulische Aktuatoren, die die Kraft zum axialen Verschieben der Schaltmuffe hydraulisch erzeugen. Ferner sind so genannte elektromechanische Aktuatoren bekannt, bei denen die Kraft eines elektrischen Motors dazu verwendet wird, um die Schaltmuffe axial zu verschieben. Hierbei wird häufig ein Rotations-/Translations-Wandler, wie eine Schaltwalze, verwendet.

Aus dem Dokument WO 86/05850 ist zur Verbindung von zwei Wellen einer Werkzeugmaschine etc. eine elektromagnetische Dauermagnet-Kupplung bekannt, deren Kräftegleichgewicht im geschlossenen Zustand auch bei Stromausfall keinen Stellungswechsel auslöst, dabei aber die Schließkraft der Kupplung so vermindert, dass diese bei unzulässigen Drehmomenten öffnen kann.

Aus dem Dokument DE 100 07 847 A1 ist eine elektromagnetische Schalteinrichtung für ein Getriebe bekannt, wobei eine Klaue zur Verbindung einer Welle mit einem Losrad mittels einer elektromagnetischen Vorrichtung axial verschiebbar ist.

Diese bekannten Schaltkupplungsanordnungen unterliegen jedoch einem relativ hohen Verschleiß oder sind funktional nicht zweckmäßig.

Das Dokument EP-A2-0 793 034 offenbart Verfahren zum Einer bzw. Ausrücken einer Gangstufe eines Getriebes, und zwar unter Verwendung eines magnetischen Kreises.

Vor dem obigen Hintergrund ist es die Aufgabe der vorliegenden Erfindung, eine verbesserte Schaltkupplungsanordnung für Kraftfahrzeuggetriebe sowie ein verbessertes Vefahren zum Ein-bzw. Ausrücken einer Gangstufe. anzugeben.

Diese Aufgabe wird durch eine Schaltkupplungsanordnung gemäß Anspruch 1 gelöst, wobei die Aktuatoranordnung eine Elektromagnetanordnung aufweist, die ansteuerbar ist, um die Schaltmuffe axial zu verschieben.

Mit einer Elektromagnetanordnung als Aktuator lassen sich die Schaltkräfte zum axialen Verschieben der Schaltmuffe berührüngslos übertragen. Demzufolge zeichnet sich die erfindungsgemäße Schaltkupplungsanordnung durch einen geringen Verschleiß aus.

Besonders bevorzugt ist die Schaltkupplungsanordnung ohne Synchronisierungsmittel (d.h. ohne Synchronring) ausgestattet, so dass die Schaltkräfte vergleichsweise gering sind.

Die obige Aufgabe wird ferner gelöst durch ein Verfahren gemäß Anspruch 15 zum Einrücken einer Gangstufe eines Getriebes, insbesondere eines Kraftfahrzeuggetriebes, und zwar durch axiales Verschieben einer Schaltmuffe in Bezug auf einen Kupplungskörper mittels einer Elektromagnetanordnung, wobei die Elektromagnetanordnung ein Magnetgehäuse, eine elektrische Spulenanordnung und einen Permanentmagneten aufweist, mit den Schritten, die Spulenanordnung zu bestromen, so dass ein erster magnetischer Kreis über das Magnetgehäuse, den Permanentmagneten, einen magnetisierbaren Ankerabschnitt der Schaltmuffe, einen Polkörper des Kupplungskörpers und einen axialen Luftspalt zwischen dem Ankerabschnitt und dem Polkörper eingerichtet wird, und bei oder nach Schließen des Luftspaltes die Bestromung zu reduzieren, wobei der Permanentmagnet einen magnetischen Haltefluss über den ersten magnetischen Kreis aufrechterhält, um die Schaltmuffe axial in der eingerückten Position zu halten.

Die obige Aufgabe wird ferner gelöst durch ein Verfahren gemäß Anspruch 16 zum Ausrücken einer Gangstufe eines Getriebes, insbesondere eines Kraftfahrzeuggetriebes, und zwar durch axiales Verschieben einer Schaltmuffe in Bezug auf einen Kupplungskörper mittels einer Elektromagnetanordnung, wobei die Elektromagnetanordnung ein Magnetgehäuse, eine elektrische Spulenanordnung und einen Permanentmagneten aufweist, und wobei die Schaltmuffe mittels eines von dem Permanentmagneten erzeugten Halteflusses über einen ersten magnetischen Kreis axial gehalten ist, mit den Schritten, die Spulenanordnung zu bestromen, so dass der von dem Permanentmagneten erzeugte magnetische Fluss in einen zweiten magnetischen Kreis verdrängt wird, der über das Magnetgehäuse, den Permanentmagneten und einen magnetisierbaren Ankerabschnitt der Schaltmuffe eingerichtet wird, und mittels dessen die Schaltmuffe axial in der ausgerückten Position gehalten werden kann.

Erfindungsgemäß weist die Elektromagnetanordnung eine Permanentmagnetanordnung und ein Magnetgehäuse auf, die so angeordnet sind, dass sie mit einem magnetisierbaren Ankerabschnitt der Schaltmuffe in der Schließ- und/oder der Offenstellung einen magnetischen Kreis bilden können, mittels dessen die Schaltmuffe axial gehalten wird. Die Permanentmagnetanordnung erzeugt dabei einen magnetischen Fluss in dem Kreis, so dass die Schaltmuffe ohne ständige Energiezufuhr axial in der Schließ-und/oder in der Offenstellung (d.h. in wenigstens einer Endstellung) gehalten werden kann.

Dabei ist es von besonderem Vorteil, wenn das Magnetgehäuse und die Permanentmagnetanordnung an einem Gehäuse des Kraftfahrzeuggetriebes festgelegt sind.

Hierbei kann das Magnetsystem am Getriebegehäuse vormontiert werden. Es ist eine kompakte Bauweise möglich.

Erfindungsgemäß weist die Permanentmagnetanordnung axial magnetisierte Permanentmagnete auf.

Diese können insbesondere ringförmig ausgebildet sein.

Erfindungsgemäß weist die Permanentmagnetanordnung zwei axial magnetisierte Permanentmagnete aufweist, die entgegengesetzt gepolt sind.

Hierduch ist es möglich, einen der Permanentmagnete der Schließstellung und den anderen Permanentmagnet der Offenstellung zuzuordnen und/oder die Magnetkräfte der Magnete in diesen Stellungen zu addieren, so dass in diesen Stellungen jeweils eine optimierte Haltekraft realisierbar ist.

Gemäß einer weiteren bevorzugten Ausführungsform ist hierbei zwischen den zwei axial magnetisierten Permanentmagneten ein weichmagnetischer Zwischenabschnitt angeordnet.

Auf diese Weise ist es möglich, magnetische Flüsse der zwei Permanentmagnete über den Zwischenabschnitt zu vereinigen, so dass insgesamt eine deutlich höhere Haltekraft mittels der zwei Permanentmagnete ausgeübt werden kann. Insbesondere können bei dieser Ausführungsform sowohl in der Offen- als auch in der Schließstellung die magnetischen Kräfte beider Permanentmagnete zur Realisierung der jeweiligen Haltekraft eingesetzt werden.

Ferner ist es insgesamt vorteilhaft, wenn das Magnetgehäuse ringförmig ausgebildet ist und zwei radial nach innen gerichtete Ringschenkel aufweist, zwischen denen die Permanentmagnetanordnung angeordnet ist.

Bei dieser Ausführungsform ist es möglich, einen magnetischen Kreis über die Permanentmagnetanordnung und einen Ringschenkel auszubilden. Es ist auch möglich, einen zweiten magnetischen Kreis über den anderen Ringschenkel und die Permanentmagnetanordnung einzurichten. Hierdurch kann die Funktionalität insgesamt erhöht werden.

Insgesamt ist es auch bevorzugt, wenn zwischen den zwei Ringschenkeln des Magnetgehäuses eine Spulenanordnung der Elektromagnetanordnung angeordnet ist.

Die Spulenanordnung ist in an sich bekannter Weise bestrombar, um über das Magnetgehäuse einen magnetischen Fluss sowie hierdurch ein magnetisches Feld und damit Schaltkräfte zu erzeugen. Durch die Anordnung der Spulenanordnung zwischen den zwei Ringschenkeln lässt sich insgesamt eine kompakte Anordnung erzielen.

Bei einer alternativen Ausführungsform ist die Spulenanordnung dabei in radialer Richtung versetzt gegenüber der Permanentmagnetanordnung zwischen den zwei Ringschenkeln angeordnet.

Diese Ausführungsform ist insbesondere bei der Verwendung von axial magnetisierten Permanentmagneten vorteilhaft und ermöglicht eine axial kompakte Bauweise.

Dabei ist der für die Spulenanordnung realisierbare Querschnitt maximierbar, so dass diese hohe Kräfte erzeugen kann.

Bevorzugt ist es ferner, wenn ein Ringschenkel über einen ersten radialen Luftspalt mit einem ersten Polkörper magnetisch gekoppelt ist, der an dem Kupplungskörper festgelegt ist.

Der erste Polkörper kann separat von dem Kupplungskörper ausgebildet sein, kann jedoch auch einstückig mit dem Kupplungskörper ausgebildet sein.

Durch die Tatsache, dass die Kupplung über einen radialen Luftspalt erfolgt, werden Axialkräfte zwischen dem feststehenden Teil der Elektromagnetanordnung und dem rotierenden Teil der Elektromagnetanordnung vermieden. Lagerbelastungen können hierdurch verringert werden.

Dabei ist es besonders bevorzugt, wenn der erste Polkörper über einen ersten axialen Luftspalt mit einem Ankerabschnitt magnetisch gekoppelt ist, der an der Schaltmuffe festgelegt ist.

Auf diese Weise kann die zum axialen Versetzen der Schaltmuffe notwendige Axialkraft unmittelbar über einen axialen Luftspalt ausgeübt werden.

Ferner ist es vorteilhaft, wenn ein weiterer Ringschenkel über einen zweiten radialen Luftspalt mit einem Ankerabschnitt magnetisch gekoppelt ist, der an der Schaltmuffe festgelegt ist.

Auch hierbei können Axialkräfte zwischen rotierenden und feststehenden Teilen verringert, vorzugsweise vermieden werden.

Gemäß einer alternativen Ausführungsform ist ein weiterer Ringschenkel mit einem zweiten Polkörper magnetisch gekoppelt, der über einen zweiten axialen Luftspalt mit einem Ankerabschnitt magnetisch gekoppelt ist, der an der Schaltmuffe festgelegt ist.

Bei dieser Ausführungsform kann die axiale Kraft zum Verschieben der Schaltmuffe entgegen der Schließrichtung über einen axialen Luftspalt ausgeübt werden. Hierbei kann ggf. auf eine Feder oder Ähnliches verzichtet werden, die die Schaltmuffe entgegen der Schließrichtung vorspannt.

Wenn die Schaltmuffe nicht entgegen der Schließrichtung elastisch vorgespannt ist, kann in der Schließstellung die volle Magnetkraft für die Haltefunktion zur Verfügung stehen, diese Magnetkraft wird also nicht um eine Federkraft reduziert.

Dabei ist es besonders bevorzugt, wenn der zweite Polkörper drehfest mit der Welle verbunden ist und über einen radialen Luftspalt mit dem weiteren Ringschenkel magnetisch gekoppelt ist.

Da der zweite Polkörper und der magnetisierbare Ankerabschnitt der Schaltmuffe folglich drehfest miteinander verbunden sind, ist die Reibung verringert.

Es versteht sich, dass es insgesamt auch bevorzugt ist, wenn ein Permanentmagnet der Permanentmagnetanordnung über einen dritten radialen Luftspalt mit einem Ankerabschnitt magnetisch gekoppelt ist, der an der Schaltmuffe festgelegt ist.

Wenn bei Einrichtung eines magnetischen Kreises die Kopplung zwischen feststehenden Teilen und rotierenden Teilen jeweils über einen radialen Luftspalt erfolgt, heben sich die entstehenden Radialkräfte aufgrund der symmetrischen Verhältnisse auf.

Somit lassen sich in den beiden Endstellungen der Schaltkupplungsanordnung Lagerbelastungen und Reibungsverluste sowie Verschleiß aufgrund der Elektromagnetanordnung vermeiden.

Insgesamt ist es ebenfalls vorteilhaft, wenn ein zwischen zwei Permanentmagneten der Permanentmagnetanordnung angeordneter weichmagnetischer Zwischenabschnitt über einen dritten radialen Luftspalt mit einem Ankerabschnitt magnetisch gekoppelt ist, der an der Schaltmuffe festgelegt ist.

Bei dieser Ausführungsform kann auf vorteilhafte Weise die magnetische Kraft beider Permanentmagnete über den Zwischenabschnitt aufsummiert und über den dritten radialen Luftspalt auf den Ankerabschnitt übertragen werden.

Besonders bevorzugt ist es, wenn die Elektromagnetanordnung dazu ausgelegt ist, einen ersten und einen zweiten magnetischen Kreis einzurichten, wobei bei Einrichtung des ersten magnetischen Kreises auf einen Ankerabschnitt der Schaltmuffe eine erste Magnetkraft ausgeübt wird, die die Schaltmuffe in Schließrichtung verschiebt.

Entsprechend ist es hierbei bevorzugt, wenn bei Einrichtung des zweiten magnetischen Kreises auf einen Ankerabschnitt der Schaltmuffe eine zweite Magnetkraft ausgeübt wird, die die Schaltmuffe entgegen der Schließrichtung verschiebt.

Gemäß einer alternativen bevorzugten Ausführungsform ist die Elektromagnetanordnung dazu ausgelegt, in der Schließ- und/oder in der Öffnungsstellung der Schaltmuffe einen ersten magnetischen Haltekreis über einen von zwei Permanentmagneten und gleichzeitig einen parallelen zweiten magnetischen Haltekreis über den zweiten Permanentmagneten einzurichten.

Bei dieser Ausführungsform ist es möglich, die magnetischen Kräfte der zwei Permanentmagneten jeweils gleichzeitig zur Realisierung einer jeweiligen Haltekraft in der Schließ- und/oder in der Öffnungsstellung zu verwenden.

Die erfindungsgemäßen Schaltkupplungsanordnungen lassen sich in vorteilhafter Weise in ein Schaltkupplungspaket integrieren, das eine erste und eine zweite Schaltkupplungsanordnung aufweist. Die erste Schaltkupplungsanordnung ist dazu ausgelegt, die Welle mittels einer ersten Schaltmuffe mit einem ersten Drehkörper zu verbinden. Die zweite Schaltkupplungsanordnung ist dabei dazu ausgelegt, die Welle mittels einer zweiten Schaltmuffe mit einem zweiten Drehkörper zu verbinden.

Hierbei ist es von besonderem Vorzug, wenn die Elektromagnetanordnungen der Schaltkupplungsanordnungen jeweils eine Permanentmagnetanordnung und ein Magnetgehäuse aufweisen, die so angeordnet sind, dass sie mit einem magnetisierbaren Ankerabschnitt der jeweiligen Schaltmuffe in der Schließ- und/oder in der Offenstellung einen magnetischen Kreis bilden können, mittels dessen die jeweilige Schaltmuffe axial gehalten wird, wobei die Magnetgehäuse ringförmig ausgebildet sind und zwei radial nach innen gerichtete Ringschenkel aufweisen, zwischen denen die Permanentmagnetanordnungen angeordnet sind.

Hierbei versteht sich, dass die Magnetgehäuse der zwei Schaltkupplungsanordnungen vorzugsweise miteinander integriert werden.

Von besonderem Vorteil ist es daher, wenn die Magnetgehäuse der zwei Schaltkupplungsanordnungen sich einen gemeinsamen Ringschenkel und/oder einen zweiten Polkörper teilen.

Bei dieser Ausführungsform können die zwei Schaltkupplungsanordnungen in axialer Richtung unmittelbar benachbart zueinander angeordnet werden und der gemeinsame Ringschenkel und/oder der zweite Polkörper ist vorzugsweise in der axialen Mittenstellung des Schaltkupplungspaketes angeordnet.

Gemäß einer bevorzugten Ausführungsform des erfindungsgemäßen Verfahrens zum Ausrücken einer Gangstufe wird die Schaltmuffe mittels einer Magnetkraft in die ausgerückte Position verschoben, die über einen radialen Luftspalt zwischen dem magnetisierbaren Ankerabschnitt und einem Schenkel des Magnetgehäuses wirkt.

Alternativ hierzu kann bei dem erfindungsgemäßen Verfahren zum Ausrücken einer Gangstufe vorgesehen sein, dass die Schaltmuffe mittels einer Magnetkraft in die ausgerückte Position verschoben wird, die über einen axialen Luftspalt zwischen dem magnetisierbaren Ankerabschnitt und einem zweiten Polkörper wirkt, der mit einem Schenkel des Magnetgehäuses magnetisch gekoppelt ist.

Der zweite Polkörper ist vorzugsweise drehfest mit der Welle verbunden. Beispielsweise kann der zweite Polkörper an der Führungsmuffe 20, an einem mit der Welle 12 fest verbundenen Zahnrad oder direkt an der Welle 12 festgelegt bzw. mit einem dieser Teile einstückig ausgebildet sein.

Der erste und der zweite Polkörper sind bei dieser Ausführungsform so angeordnet, dass der magnetisierbare Ankerabschnitt axial dazwischen hin- und herbewegt werden kann.

Bei dieser Ausführungsform ist es in der Regel nicht notwendig, dass eine Vorspannkraft mittels eines mechanischen Energiespeichers entgegen der Einrückrichtung vorgesehen wird. Daher kann im eingerückten Zustand die volle Magnetkraft für die Haltefunktion zur Verfügung stehen. Hingegen ist hierbei beim Ausrückvorgang ein um die nicht vorhandene Federkraft geringeres Kraftangebot vorhanden.

Insbesondere bei der ersten alternativen Ausführungsform, bei der die Schaltmuffe mittels einer über einen radialen Luftspalt wirkenden Magnetkraft ausgerückt wird, ist es besonders bevorzugt, wenn die Schaltmuffe mittels eines mechanischen Energiespeichers entgegen der Einrückrichtung vorgespannt wird.

Hierdurch kann insbesondere ein sicheres Ausrücken der Gangstufe erzielt werden.

Ferner ist es vorteilhaft, wenn bei den erfindungsgemäßen Verfahren das Magnetgehäuse und der Permanentmagnet gehäusefest angeordnet und mit dem ersten Polkörper bzw. dem Ankerabschnitt über radiale Luftspalte verbunden sind.

Insgesamt lässt sich mit der erfindungsgemäßem Schaltkupplungsanordnung bzw. dem erfindungsgemäßen Verfahren wenigstens einer der folgenden Vorteile erzielen:
- kompakte Bauweise,
- berührungslose Schaltkraftübertragung zwischen rotierenden und gehäusefesten Teilen,
- eine Funktionsintegration dadurch, dass die Schaltmuffe als Magnetanker ausgebildet ist,
- Ermöglichen einer Vormontage, indem das gehäusefeste Magnetsystem am Getriebegehäuse vormontiert werden kann,
- verschleißfreie Aktuatorik,
- relativ einfacher Aufbau,
- einfache Regelung: definierte Endlage.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine perspektivische schematische Teilschnittansicht durch eine nicht erfindungsgemäße Schaltkupplungsanordnung ;
Fig. 2 eine schematische Darstellung eines Kraftfahrzeuggetriebes, bei dem die nicht erfindungsgemäße Schaltkupplungsanordnung verwendbar ist;
Fig. 3 drei Phasen beim Einrücken einer Gangstufe mittels einer nicht erfindungsgemäße Schaltkupplungsanordnung;
Fig. 4 drei Phasen beim Ausrücken einer Gangstufe mittels einer nicht erfindungsgemäße Schaltkupplungsanordnung;
Fig. 5 eine perspektivische schematische Teilschnittansicht durch eine Schaltkupplungsanordnung gemäß einer alternativen nicht erfindungsgemäße Ausführungsform;
Fig. 6 drei Phasen beim Einrücken einer Gangstufe mittels der Schaltkupplungsanordnung der Fig. 5;
Fig. 7 drei Phasen beim Ausrücken einer Gangstufe mittels der Schaltkupplungsanordnung der Fig. 5;
Fig. 8 eine schematische Längsschnittansicht durch ein,Schaltkupplungspaket mit zwei nicht erfindungsgemäß Schaltkupplungsanordnungen, die vom Aufbau her jeweils einer der Schaltkupplungsanordnungen der Fig. 1 bis 7 entsprechen, wobei die Schaltkupplungsanordnungen ein gemeinsames Magnetehäuse mit einem gemeinsamen Ringschenkel aufweisen;
Fig. 9 eine schematische Längsschnittansicht durch eine Ausführungsform eines erfindungsgemäßen Schaltkupplungspaketes mit zwei Schaltkupplungsanordnungen, die jeweils zwei axial magnetisierte Permanentmagnete und einen dazwischen angeordneten Zwischenabschnitt aufweisen;
Fig. 10 eine Detailansicht der Fig. 9 mit einer Darstellung der Permanentmagnete und Zwischenabschnitte;
Fig. 11 drei Phasen beim Einrücken einer Gangstufe mittels einer der Schaltkupplungsanordnungen des Schaltkupplungspaketes der Fig. 9; und
Fig. 12 drei Phasen beim Ausrücken einer Gangstufe mittels der Schaltkupplungsanordnung der Fig. 9.

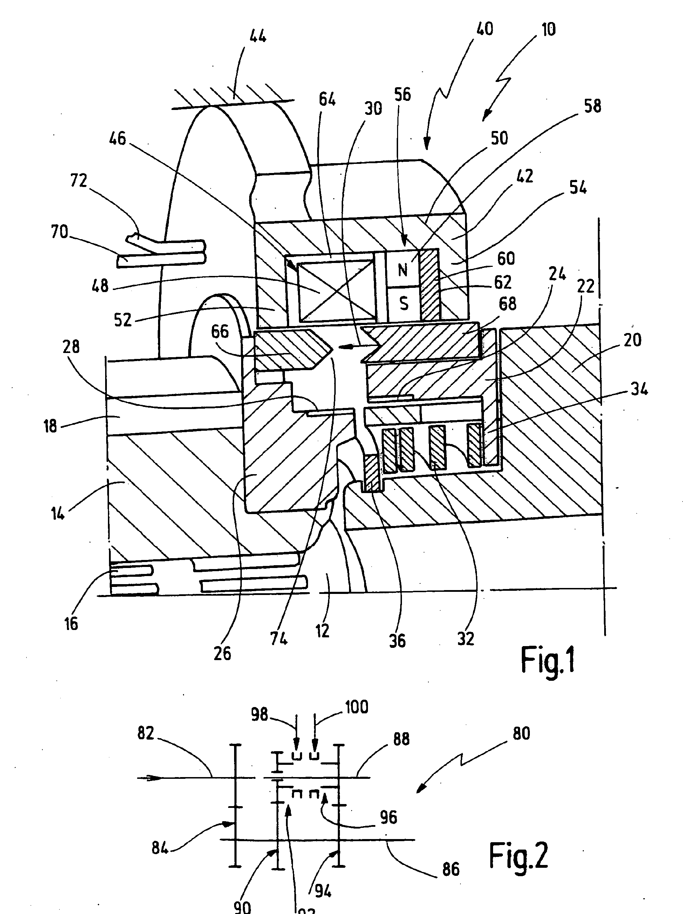

In Fig. 1 ist eine Schaltkupplungsanordnung generell mit 10 bezeichnet.

Die Schaltkupplungsanordnung 10 dient dazu, eine Welle 12 mit einem Drehkörper, wie einem Losrad 14, zu verbinden bzw. die Verbindung zu lösen.

Das Losrad 14 ist drehbar an der Welle 12 gelagert, beispielsweise mittels schematisch gezeigter Nadellager 16.

Das Losrad 14 weist eine Stirnverzahnung 18 auf, die beispielsweise in Eingriff treten kann mit einer entsprechenden Verzahnung eines Festrades an einer parallelen Welle.

An der Welle 12 ist eine Führungsmuffe 20 festgelegt. Die Führungsmuffe 20 kann separat von der Welle 12 ausgebildet oder einstückig hiermit ausgebildet sein.

Die Führungsmuffe 20 dient dazu, eine Schaltmuffe (Schiebemuffe) 22 axial verschieblich zu lagern. Die Schaltmuffe 22 weist dabei eine Schaltverzahnung, beispielsweise eine Innenverzahnung 24, wie dargestellt, auf.

An dem Losrad 14 ist ein Kupplungskörper 26 festgelegt. Dieser kann separat von dem Losrad 14 hergestellt und hieran festgelegt sein. Er kann jedoch auch einstückig mit dem Losrad 14 ausgebildet sein.

Der Kupplungskörper 26 weist eine entsprechende Schaltverzahnung, hier eine Außenverzahnung 28, auf.

Wenn die Schaltmuffe 22 in axialer Richtung verschoben wird (beispielsweise in Fig. 1 in Schließrichtung 30), wird die Innenverzahnung 24 der Schaltmuffe 22 in die Außenverzahnung 28 des Kupplungskörpers 26 eingeführt, so dass die Welle 12 und das Losrad 14 drehfest miteinander verbunden werden. Bei Zurückziehen der Schaltmuffe 22 entgegen der Schaltrichtung 30 treten die Verzahnungen 24, 28 außer Eingriff, so dass das Losrad 14 in Bezug auf die Welle 12 frei drehbar ist.

Es versteht sich, dass die Schaltmuffe 22 mit der Welle 12 (der Führungsmuffe 20) drehfest verbunden ist.

Die Schaltmuffe 22 ist in Fig. 1 in einer Offenstellung gezeigt, also in einer Stellung, bei der die Verzahnungen 24, 28 außer Eingriff stehen. Die Schaltmuffe 22 ist mittels eines mechanischen Energiespeichers, im vorliegenden Fall mittels einer Feder 32, in diese Offenstellung vorgespannt. Zu diesem Zweck weist die Schaltmuffe 22 einen Radialsteg 34 auf, an dem ein Ende der Feder 32 anliegt. Zum anderen ist an der Führungsmuffe 20 ein Sicherungsring 36 festgelegt, an dem das andere Ende der Feder 32 anliegt.

Zum axialen Verschieben der Schaltmuffe 22 in Bezug auf die Führungsmuffe 20 ist eine Aktuatoranordnung 40 vorgesehen.

Die Aktuatoranordnung 40 beinhaltet ein generell ringförmiges Magnetgehäuse 42, das an einem Getriebegehäuse 44 festgelegt ist. Die Aktuatoranordnung 40 beinhaltet ferner eine Elektromagnetanordnung 46. Diese wiederum beinhaltet eine elektrische Spulenanordnung in Form einer Ringspule 48.

Das Magnetgehäuse 42 weist einen axialen Ringsteg 50 sowie einen ersten radialen Ringschenkel 52 und einen zweiten radialen Ringschenkel 54 auf. Die zwei Ringschenkel 52, 54 stehen von dem axialen Ringsteg 50 nach innen vor. Im Querschnitt ist das Magnetgehäuse folglich etwa U-förmig.

Radial innerhalb des axialen Ringsteges 50 ist zwischen den zwei Ringschenkeln 52, 54 zum einen die Spule 48 angeordnet. Zum anderen ist dazwischen eine Permanentmagnetanordnung 56 angeordnet, die einen Permanentmagneten 58 aufweist. Der Permanentmagnet 58 ist als Ringmagnet ausgebildet, der radial magnetisiert ist, so dass ein Pol radial außen und ein Pol radial innen ist.

Die Permanentmagnetanordnung 56 beinhaltet ferner einen Träger 60 aus einem nichtmagnetischen Material. Die Permanentmagnetanordnung 56 ist benachbart zu dem zweiten Ringschenkel 54 angeordnet, derart, dass der Träger 60 den Permanentmagneten 58 von dem zweiten Ringschenkel 54 beabstandet hält. Mit anderen Worten ist zwischen dem zweiten Ringschenkel 54 und dem Permanentmagneten 56 ein Zwischenraum (62) gebildet, der mit einem nicht-magnetischen Medium (im vorliegenden Fall dem Träger 60) gefüllt ist.

Die Spule 48 ist in an sich bekannter Weise auf einem Spulenkörper 64 gewickelt. Der Spulenkörper 64 kann aus Kunststoff hergestellt sein, beispielsweise aus POM oder einem anderen nichtmagnetisierbaren Material wie z.B. austenitischer Edelstahl.

Mit dem Kupplungskörper 26 ist ein Polkörper 66 aus einem magnetisierbaren Material fest verbunden. Der Polkörper 66 liegt dabei radial innerhalb des ersten Ringschenkels 52 und ist mit diesem über einen schmalen radialen Luftspalt (nicht näher bezeichnet) magnetisch gekoppelt. In entsprechender Weise ist an der Schaltmuffe 22 ein Ankerabschnitt 68 aus einem magnetisierbaren Material festgelegt. In der in Fig. 1 gezeigten Offenstellung liegt der Ankerabschnitt 68 radial innerhalb des zweiten Ringschenkels 54 und erstreckt sich axial in Richtung hin zu dem Polkörper 66. Dabei liegt der Ankerabschnitt 68 auch radial innerhalb des Permanentmagneten 58 bzw. der Permanentmagnetanordnung 56.

In der gezeigten Offenstellung ist zwischen einer axialen Stirnseite des Polkörpers 66 und einer axialen Stirnseite des Ankerabschnittes 68 ein axialer Luftspalt 74 gebildet. Die einander gegenüberliegenden Stirnseiten können dabei konisch zulaufend ausgebildet sein, um auch bei vergleichsweise großem Hub eine relativ hohe magnetische Kraft erzielen zu können.

Der Polkörper 66 und der Ankerabschnitt 68 sind, wie gesagt, aus einem magnetisierbaren Material gebildet. Bevorzugt sind sie getrennt von dem Kupplungskörper 26 bzw. der Schaltmuffe 22 ausgebildet. Es ist jedoch generell auch denkbar, den Polkörper 66 einstückig mit dem Kupplungskörper 26 bzw. den Ankerabschnitt 58 einstückig mit der Schaltmuffe 22 auszubilden.

Bei 70 und 72 sind ferner elektrische Zuleitungen gezeigt, die dazu dienen, die Spule 48 zu bestromen.

Man erkennt dass die Schaltkupplungsanordnung 10 keine eigenen Synchronisierungsmittel, wie etwa einen Synchronring, beinhaltet. Die Schaltkupplungsanordnung 10 arbeitet daher nach der Art einer Klauenkupplung. Die hierbei zum Einspuren der Verzahnungen 24, 28 notwendigen Kräfte sind im Vergleich zu herkömmlichen Synchronkupplungen relativ gering. Die Synchronisierung kann dabei durch andere Mittel vorgenommen werden. Bei einem Getriebe für ein elektromotorisch angetriebenes Fahrzeug kann die Synchronisierung gegebenenfalls über den elektromotorischen Antrieb erfolgen. Gleiches gilt bei so genannten Hybridantrieben. Es können jedoch auch andere Mittel zur Synchronisierung vorgesehen sein, wie beispielsweise Bremsen oder Ähnliches.

Es ist jedoch auch denkbar, die relativen Drehstellungen von Welle 12 und Losrad 14 zu überwachen und die Schaltkupplungsanordnung 10 bei geeigneter relativer Drehstellung zu betätigen, um Kratzen und Ähnliches zu vermeiden.

Ferner ist es natürlich auch möglich, eine erfindungsgemäße Schaltkupplungsanordnung mit Synchronisierungsmitteln (Synchronring) auszustatten.

In Fig. 2 ist beispielhaft ein Kraftfahrzeuggetriebe dargestellt, für das die Schaltkupplungsanordnung 10 der Fig. 1 verwendet werden kann. Das Getriebe 80 ist beispielhaft als Getriebe für den Längseinbau dargestellt und weist zwei Gangstufen auf. Es ist jedoch auch möglich, die Schaltkupplungsanordnung 10 bei Getrieben mit mehreren Gangstufen zu verwenden.

Bevorzugt kann die Schaltkupplungsanordnung 10 auch bei einem Getriebe verwendet werden, das als 2-Gang-Getriebe ausgelegt ist, und zwar zur Verbindung mit einem Elektromotor als Antriebsmotor für das Kraftfahrzeug. Ein derartiger Antriebsstrang ist beschrieben in der deutschen Gebrauchsmusteranmeldung 20 2005 019 438.7, deren Inhalt vorliegend vollständig durch Bezugnahme enthalten sein soll.

Das dargestellte Getriebe 80 ist jedoch, wie gesagt, ein für Längseinbau geeignetes Getriebe und beinhaltet eine Eingangswelle 82, die über einen Konstanten-Radsatz 84 mit einer Vorgelegewelle 86 verbunden ist. Ferner weist das Getriebe 80 eine Ausgangswelle 88 auf. Ein erster Radsatz 90 mit einem Losrad und einem Festrad und ein zweiter Radsatz 94 mit einem Losrad und einem Festrad dienen zur Darstellung jeweiliger Gangstufen des Getriebes 80. Das Losrad des Radsatzes 90 ist mittels einer ersten Schaltkupplung 92 mit der Ausgangswelle 88 verbindbar. Das Losrad des zweiten Radsatzes 94 ist mittels einer zweiten Schaltkupplung 96 mit der Ausgangswelle 88 verbindbar.

Zum Betätigen der Schaltkupplungen 92, 96 dienen eine erste bzw. eine zweite Aktuatoranordnung 98, 100.

Die erste Schaltkupplung 92 und die erste Aktuatoranordnung 98 können durch eine Schaltkupplungsanordnung 10 der Fig. 1 gebildet sein. Entsprechend können die zweite Schaltkupplung 96 und die zweite Aktuatoranordnung 100 durch eine Schaltkupplungsanordnung 10 der Fig. 1 gebildet sein.

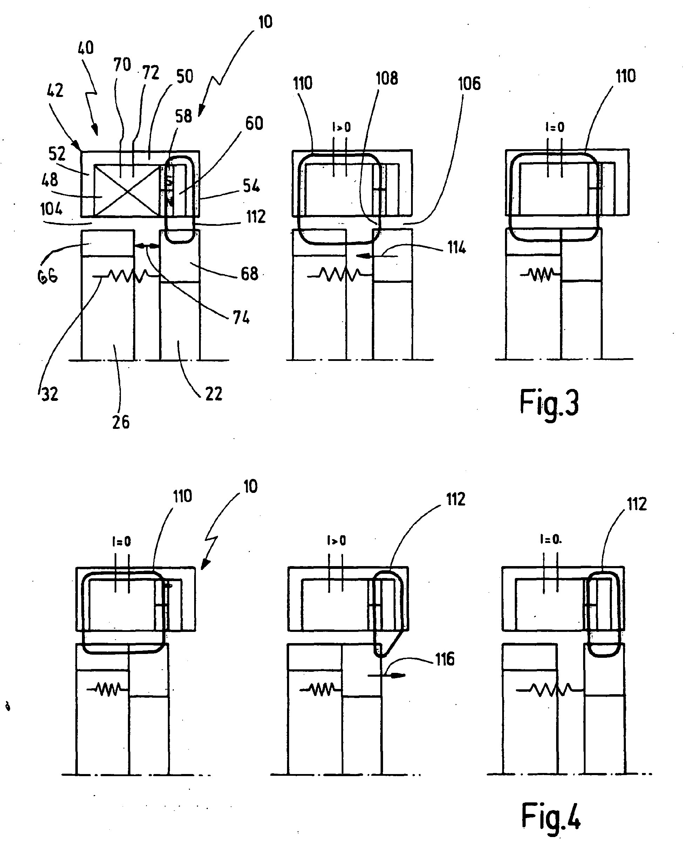

Fig. 3 zeigt das Einrücken einer Gangstufe bzw. das Schließen einer erfindungsgemäßen Schaltkupplungsanordnung. In entsprechender Weise zeigt Fig. 4 das Ausrücken einer Gangstufe mit einer erfindungsgemäßen Schaltkupplungsanordnung 10. Der grundsätzliche Aufbau und die grundsätzliche Funktionsweise der Schaltkupplungsanordnung 10 der Figuren 3 und 4 entspricht jener der Fig. 1. Gleiche Elemente sind daher mit gleichen Bezugszeichen versehen.

Ferner ist in der linken Darstellung von Fig. 3 die Schaltkupplungsanordnung 10 in einer Offenstellung gezeigt. Man erkennt, dass zwischen dem ersten Ringschenkel 52 und dem Polkörper 66 ein erster radialer Luftspalt 104 eingerichtet ist. Ferner ist zwischen dem Ankerabschnitt 68 und dem zweiten Ringschenkel 54 ein zweiter radialer Luftspalt 106 eingerichtet. Wie es in der mittleren Darstellung der Fig. 3 gezeigt ist, ist in der Offenstellung ferner zwischen dem Permanentmagneten 58 und dem Ankerabschnitt 68 ein dritter radialer Luftspalt 108 eingerichtet.

In Fig. 3 ist links eine Ruhestellung dargestellt, bei der die Spule 48 nicht bestromt ist. Der Strom I, der über die elektrischen Leitungen 70, 72 geführt ist, beträgt 0 Ampere. Der Permanentmagnet 58 erzeugt einen magnetischen Fluss, der über den axialen Ringsteg 50 den zweiten Ringschenkel 54 und den Ankerabschnitt 68 einen magnetischen Kreis 112 einrichtet, der nachstehend als zweiter magnetischer Kreis 112 bezeichnet wird.

Die Schaltmuffe 22 wird über diesen zweiten magnetischen Kreis 112 in der ausgerückten Position gehalten. Die in der gezeigten Endstellung von dem feststehenden Teil der Elektromagnetanordnung auf den rotierenden Teil ausgeübten Axialkräfte sind jedoch relativ gering oder sogar Null. Es ist daher bevorzugt vorgesehen, dass die Schaltmuffe 22 mittels der Feder 32 in die ausgerückte Stellung axial vorgespannt wird.

Zum Einrücken der Gangstufe wird die Spule 48 nunmehr bestromt, was in Fig. 3 in der Mitte dargestellt ist (I > 0).

Hierbei wird durch die Wirkung der Spule 48 ein magnetischer Fluss erzeugt, mittels dessen ein erster magnetischer Kreis 110 eingerichtet ist, der von dem ersten Ringschenkel 52 über den Polkörper 66, den axialen Luftspalt 74, den Ankerabschnitt 68 und den Permanentmagneten 58 sowie den axialen Ringsteg 50 eingerichtet wird.

Der Kreis 110 erzeugt eine erste Magnetkraft 114 in axialer Richtung zwischen dem Polkörper 66 und dem Ankerabschnitt 68, so dass der Ankerabschnitt 68 hierdurch axial verschoben wird, und zwar gegen die Kraft der Feder 32. Es versteht sich dabei, dass der Kupplungskörper 26 axial unverschieblich ist.

Hierbei greift dann die Verzahnung 24 (siehe Fig. 1) in die Verzahnung 28 des Kupplungskörpers 26 und stellt so den Formschluss zwischen dem Losrad 14 und der Welle 12 her. Letztlich kommt der Ankerabschnitt 68 an dem Polkörper 66 zur Anlage, wie es in Fig. 3 rechts dargestellt ist. Die Endstellung "Gang eingerückt" ist erreicht.

Der Strom kann jetzt abgeschaltet werden (I = 0). Durch den Permanentmagneten 58 wird dabei ein magnetischer Fluss aufrechterhalten, der den ersten magnetischen Kreis 110 aufrechterhält. Die Schaltmuffe 22 wird daher in der eingerückten Position (Schließstellung) axial gehalten, und zwar gegen die Vorspannung der Feder 32.

Dabei gehen die Axialkräfte zwischen dem feststehenden und dem rotierenden System der Schaltkupplungsanordnung 10 gegen Null. Die radialen Kräfte dazwischen heben sich insgesamt auf, so dass der Verschleiß und die Lagerbelastung deutlich verringert sind.

Zum Ausrücken der Gangstufe ist von diesem Zustand auszugehen, der in Fig. 4 nunmehr links dargestellt ist.

Zum Ausrücken wird die Spule 48 erneut bestromt (I > 0 im mittleren Bild der Fig. 4). Die Stromrichtung wird dabei vorzugsweise umgekehrt (d.h. genauer I < 0). Hierdurch verdrängt das magnetische Feld der Spule 48 das Feld des Permanentmagneten 58 in den zweiten magnetischen Kreis 112 (Nebenschlusskreis), so dass die magnetische Haltekraft zwischen Polkörper 66 und Ankerabschnitt 68 verloren geht. Nun drückt die Feder 32 die Schaltmuffe 22 in Richtung Offenstellung. Über den zweiten magnetischen Kreis 112 wird dabei eine unterstützende zweite Magnetkraft 116 erzeugt. Dies wird insbesondere dadurch erreicht, dass in der Schließstellung ein hinterer Abschnitt des Ankerabschnittes 68 von dem zweiten Ringschenkel 54 axial beabstandet ist. Hierdurch wird über den zweiten magnetischen Kreis 112 zwischen dem zweiten Ringschenkel 54 und dem Ankerabschnitt 68 eine Kraft mit einer axialen Komponente in Richtung der zweiten Magnetkraft 116 erzeugt.

Schließlich kommt die Schaltmuffe 22 im ausgerückten Zustand in Anlage an eine Schulter der Führungsmuffe 20 (vgl. Fig. 1). Nun kann der Strom abgeschaltet werden (I = 0, rechtes Bild in Fig. 4). Die Schaltmuffe 22 wird dann von der Feder 32 im ausgerückten Zustand gehalten. Dies wird durch den zweiten magnetischen Kreis 112, der von dem Permanentmagneten 58 aufrechterhalten wird, unterstützt. Axialkräfte zwischen dem feststehenden und dem rotierenden System der Schaltkupplungsanordnung 10 gehen dabei jedoch gegen Null. Dann, wenn versucht wird, die Schaltmuffe 22 in Schließrichtung zu bewegen, entwickelt sich jedoch wieder eine Axialkraft 116, so dass die Schaltmuffe 22 auch mittels des zweiten magnetischen Kreises 112 in der ausgerückten Position gehalten wird.

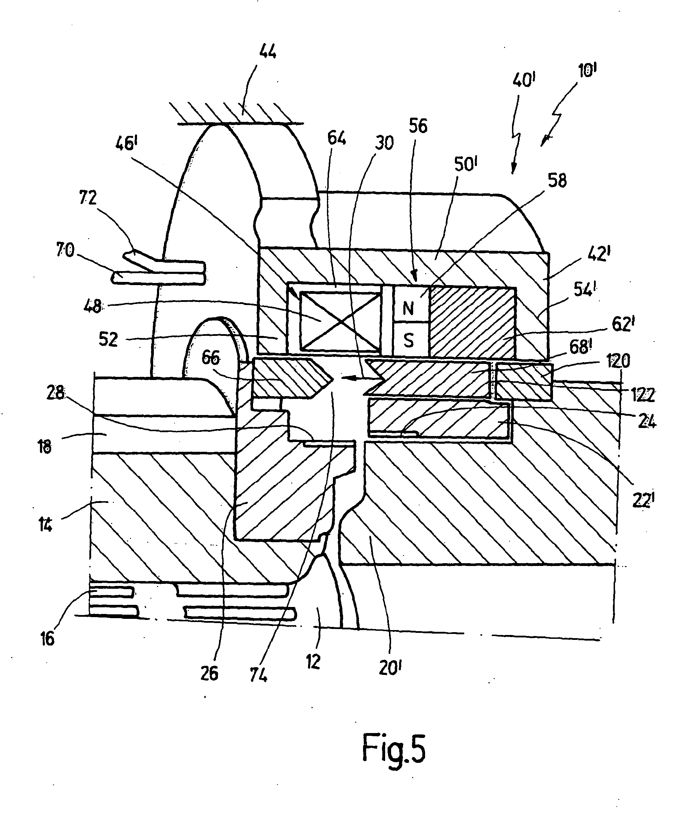

In Fig. 5 ist eine alternative Ausführungsform einer Schaltkupplungsanordnung generell mit 10' bezeichnet.

Die Schaltkupplungsanordnung 10' entspricht hinsichtlich Aufbau und hinsichtlich Funktion der Schaltkupplungsanordnung 10 der Fig. 1. Gleiche Elemente tragen daher gleiche Bezugszeichen. Im Folgenden wird lediglich auf die Unterschiede eingegangen.

Während die Schaltmuffe 22 der Schaltkupplungsanordnung 10 entgegen der Einrückrichtung vorgespannt ist (mittels der Feder 32), ist die Schaltmuffe 22' der Schaltkupplungsanordnung 10' weder in die eine noch in die andere Richtung vorgespannt.

Das Magnetgehäuse 42' ist bei der Aktuatoranordnung 40' so ausgebildet, dass der axiale Ringsteg 50' etwas länger ausgebildet ist, so dass der zweite radiale Ringschenkel 54' etwas weiter von dem Permanentmagneten 58 beabstandet ist. Der Zwischenraum 62 ist mit einem nichtmagnetischen Medium gefüllt.

Radial innerhalb des freien Endes des zweiten Ringschenkels 54' ist ein zweiter Polkörper 120 angeordnet. Der zweite Polkörper 120 ist magnetisch mit dem zweiten

Ringschenkel 54' gekoppelt. Der zweite Polkörper 120 kann vorzugsweise drehfest mit der Welle 12 verbunden sein. Dabei kann der zweite Polkörper 120 bspw. an der Führungsmuffe 20, an einem mit der Welle 12 fest verbundenen Zahnrad oder direkt an der Welle 12 festgelegt bzw. mit einem der genannten Teile einstückig ausgebildet sein.

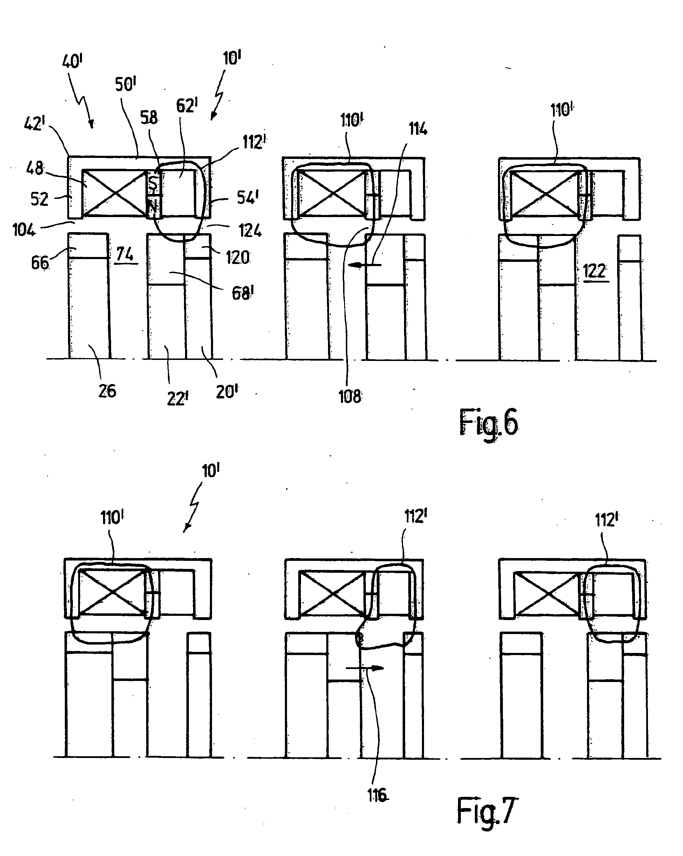

Der zweite Polkörper 120 ist in diesem Fall über einen radialen Luftspalt 124 (vgl. Fig. 6) mit dem zweiten Ringschenkel 54' magnetisch gekoppelt.

Der magnetisierbare Ankerabschnitt 68', der mit der Schaltmuffe 22' fest verbunden ist, ist folglich zwischen dem ersten Polkörper 66 und dem zweiten Polkörper 120 hin- und herbewegbar. Sofern der magnetisierbare Ankerabschnitt 68' an dem ersten Polkörper 66 anliegt, befindet sich die Schaltmuffe 22' im eingerückten Zustand. In diesem Fall ist zwischen dem magnetisierbaren Ankerabschnitt 68' und dem zweiten Polkörper 120 ein zweiter axialer Luftspalt 122 vorgesehen.

Sofern der magnetisierbare Ankerabschnitt 68' an dem zweiten Polkörper 120 anliegt (wie in Fig. 5 gezeigt), ist zwischen dem Ankerabschnitt 68' und dem ersten Polkörper 66 ein erster axialer Luftspalt 74 ausgebildet.

Man erkennt aus den Fig. 6 und 7, dass der Ablauf beim Einrücken einer Gangstufe oder beim Ausrücken einer Gangstufe generell vergleichbar ist zu den entsprechenden Abläufen bei der Schaltkupplungsanordnung 10 der Fig. 1.

Im eingerückten Zustand, bei dem der Ankerabschnitt 68' an dem ersten Polkörper 66 anliegt (in Fig. 6 rechts gezeigt), kann jedoch eine größere Haltekraft auf den Ankerabschnitt 68' ausgeübt werden. Insbesondere ist keine Feder 32 vorhanden, die die Schaltmuffe 22' entgegen der Einrückrichtung vorspannt.

Beim Ausrücken einer Gangstufe (Fig. 7) wird das Feld des Permanentmagneten 58 durch Bestromung in den zweiten magnetischen Kreis 112' (Nebenschlusskreis) verdrängt, wobei zwischen dem Ankerabschnitt 68' und dem zweiten Polkörper 120 ein Magnetfluss in axialer Richtung fließt, der eine relativ hohe Kraft auf den magnetischen Ankerabschnitt 68' ausüben kann. Die Magnetkraft 116 ist hinreichend, um den Ankerabschnitt 68' von dem ersten Polkörper 66 zu lösen, obgleich bei der Schaltkupplungsanordnung 10' der Fig. 5 bis 7 keine Feder vorgesehen ist, die die Schaltmuffe 22' in Ausrückrichtung vorspannen würde.

Insgesamt kann der mechanische Aufbau der Schaltkupplungsanordnung 10' gegenüber der Schaltkupplungsanordnung 10 der Fig. 1 vereinfacht werden. Der zweite Polkörper 120 kann auf vergleichsweise einfache Weise wellenfest, z.B. in eine Wellenbaugruppe, integriert werden.

Im eingerückten Zustand (Fig. 6 rechts) steht die volle Magnetkraft für die Haltefunktion zur Verfügung, und wird nicht um die Kraft der Feder 32 reduziert, wie im Falle der Schaltkupplungsanordnung 10. Beim Ausrücken (Fig. 7) steht jedoch eine etwas geringere Kraft zur Verfügung, da die Kraftkomponente der Feder 32 fehlt.

Der Permanentmagnet 58 kann aus Blockmagneten aufgebaut sein, die an dem Träger 60 festgelegt, beispielsweise aufgeklebt werden. Die Aufmagnetisierung in radialer Richtung kann nach dem Klebevorgang erfolgen.

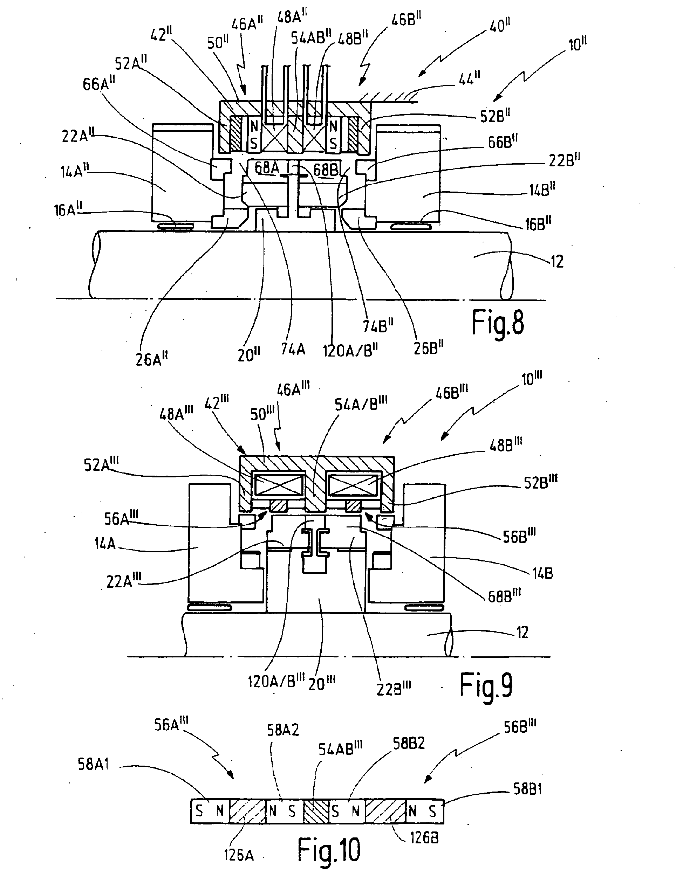

Fig. 8 stellt eine schematische axiale Schnittansicht durch ein Schaltkupplungspaket 10" mit zwei Schaltkupplungsanordnungen dar, die jeweilige Schaltmuffen 22A", 22B" betätigen.

Die zwei Schaltkupplungsanordnungen des Schaltkupplungspaketes 10" können jeweils im Wesentlichen identisch aufgebaut sein wie die Schaltkupplungsanordnungen, die in den Fig. 1 bis 7 gezeigt sind.

Generell ist es denkbar, diese Schaltkupplungsanordnungen axial nebeneinander anzuordnen, um ein Schaltkupplungspaket zu bilden. Das Schaltkupplungspaket 10" zeichnet sich jedoch dadurch aus, dass die Magnetgehäuse der zwei Schaltkupplungsanordnungen miteinander integriert sind.

Das Magnetgehäuse 42" weist drei Ringschenkel 52A", 54A/B" und 52B" auf.

Zwischen dem einen radialen Ringschenkel 52A" und dem mittleren "gemeinschaftlichen" Ringschenkel 54A/B" ist die Elektromagnetanordnung 46A" der ersten Schaltkupplungsanordnung angeordnet. Zwischen dem mittleren Ringschenkel 54A/B" und dem Ringschenkel 52B" an dem anderen axialen Ende ist die Elektromagnetanordnung 46B" der zweiten Schaltkupplungsanordnung angeordnet.

Radial innerhalb des mittleren Ringschenkels 54a/B" ist ein "gemeinschaftlicher" zweiter Polkörper 120a/B" angeordnet, der an der Führungsmuffe 20" festgelegt ist. Beispielsweise kann die Führungsmuffe axial geteilt ausgebildet sein, um den zweiten Polkörper 120A/B" dazwischen aufzunehmen.

Die Bauteile der zwei Schaltkupplungsanordnungen sind mit den gleichen Bezugsziffern versehen wie die Schaltkupplungsanordnungen der Fig. 1 bis 7. Für die eine Schaltkupplungsanordnung wurde der Suffix "A" gewählt, für die andere der Suffix "B".

Um zu verhindern, dass die zwei Gangstufen des Schaltkupplungspaketes 10" gleichzeitig eingelegt werden, ist vorzugsweise eine elektrische und/oder eine mechanische Verriegelung (Sicherung) vorgesehen.

Der übrige generelle Aufbau und die allgemeine Funktionsweise der zwei Schaltkupplungsanordnungen des Schaltkupplungspaketes 10" entspricht ansonst dem Aufbau bzw. der Funktion der Schaltkupplungsanordnungen der Fig. 1 bis 7, so dass sich eine nochmalige Darstellung erübrigt.

Fig. 9 zeigt eine weitere alternative Ausführungsform eines Schaltkupplungspaketes 10"', das wiederum zwei Schaltkupplungsanordnungen aufweist.

Die Schaltkupplungsanordnungen des Schaltkupplungspaketes 10"' sind wiederum identisch zueinander aufgebaut und teilen sich ein gemeinsames Magnetgehäuse 42"', das ähnlich wie das Gehäuse 42" drei radiale Ringschenkel 52A"', 54A/B"' bzw. 52B"' aufweist, und einen gemeinsamen zweiten Polkörper 120A/B".

Die Schaltkupplungsanordnungen des Schaltkupplungspaketes 10"' unterscheiden sich jedoch von den Schaltkupplungsanordnungen der Fig. 1 bis 8 dadurch, dass jede Schaltkupplungsanordnung anstelle eines radial magnetisierten Permanentmagneten zwei axial magnetisierte Permanentmagnete aufweist.

Dies ist im Detail in Fig. 10 dargestellt. So weist die Schaltkupplungsanordnung zwischen den Ringschenkeln 52A"', 54A/B"' einen ersten axial magnetisierten Permanentmagneten 58A1 und einen zweiten axial magnetisierten Permanentmagneten 58A2 auf, die entgegengesetzt zueinander polarisiert sind. Zwischen den zwei Permanentmagneten 58A1, 58A2 ist ein weichmagnetischer Zwischenabschnitt 126A angeordnet. In der Darstellung der Fig. 10 sind jeweils die Nordpole der Permanentmagnete 58A1, 58A2 benachbart zu dem Zwischenabschnitt 126A angeordnet. Es versteht sich jedoch, dass diese Polarität auch vertauscht werden kann.

Die Permanentmagnetanordnung 56B"' der zweiten Schaltkupplungsanordnung weist einen identischen Aufbau auf, mit zwei Permanentmagneten 58B1, 58B2, zwischen denen ein weichmagnetischer Zwischenabschnitt 126B angeordnet ist.

Ferner ist Fig. 9 zu entnehmen, dass die Elektromagnetanordnungen 46A"', 46B"' jeweils eine Spulenanordnung 48A"', 48B"' aufweisen, die in radialer Richtung gesehen außerhalb der Permanentmagnetanordnungen 56A"' bzw. 56B"' angeordnet sind. Der Querschnitt der Spulenanordnungen ist damit zwischen den jeweiligen zwei Ringschenkeln maximierbar.

Der übrige Aufbau der Schaltkupplungsanordnungen des Schaltkupplungspaketes 10"' kann im Wesentlichen dem Aufbau der zuvor beschriebenen Schaltkupplungsanordnungen entsprechen. Es ist möglich, den Ankerabschnitt 68"', der mit der jeweiligen Schaltmuffe 22"' verbunden ist, in eine Mittelposition vorzuspannen (entsprechende Federn sind in Fig. 9 nicht dargestellt), oder die Mittelposition aufgrund der symmetrischen Haltekräfte der Permanentmagnete der zwei Schaltkupplungsanordnungen zu realisieren.

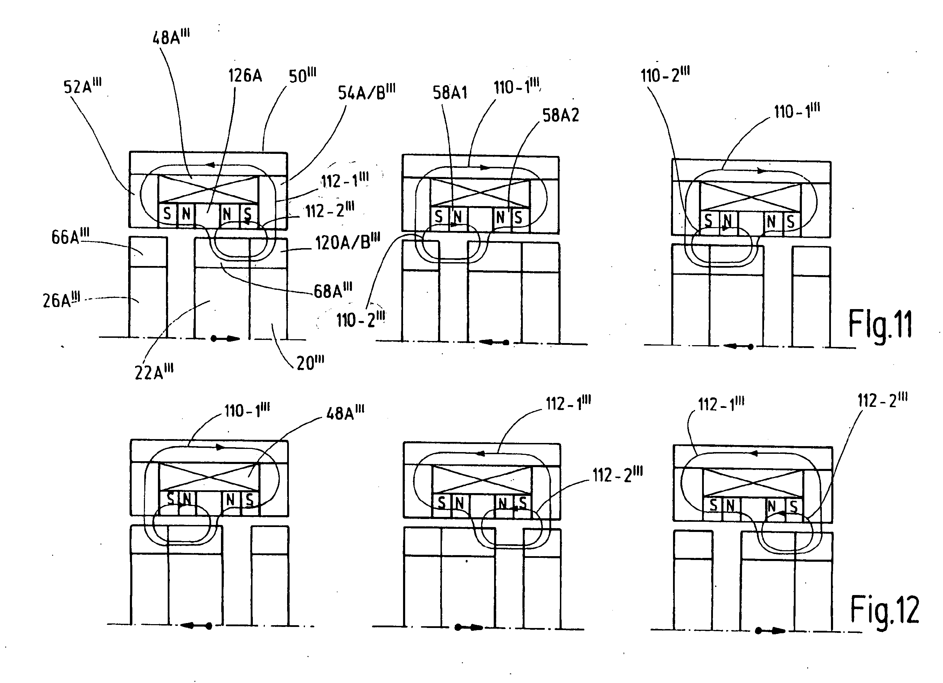

Die Funktionsweise der Schaltkupplungsanordnungen des Schaltkupplungspaketes 10"' wird nachfolgend anhand der Fig. 11 und 12 am Beispiel der einen Schaltkupplungsanordnung mit dem Suffix "A" erläutert. Es versteht sich, dass die Funktionsweise der anderen Schaltkupplungsanordnung identisch ist.

In Fig. 11 sind drei Phasen bei einem Einrücken einer zugeordneten Gangstufe mittels der gezeigten Schaltkupplungsanordnung dargestellt. In entsprechender Weise zeigt Fig. 12 das Ausrücken der Gangstufe mit der gleichen Schaltkupplungsanordnung.

Man erkennt in Fig. 11 in der linken Darstellung, dass sich die Schaltmuffe 22A"' mit dem zugeordneten, radial außenliegenden Ankerabschnitt 68A"' in einer Neutralposition befindet, also beispielsweise in der in Fig. 9 dargestellten Mittenposition des Schaltkupplungspaketes 10"'.

Dabei wird der Ankerabschnitt 68A"' an dem zweiten Polkörper 120A/B"' der Führungsmuffe 20"' gehalten. Dies erfolgt durch die Magnetkraft der zwei Permanentmagnete 58A1, 58A2. Genauer gesagt wird ein erster magnetischer Haltekreis 112-1"' eingerichtet zwischen dem Polkörper 120A/B"', dem Ankerabschnitt 68A"', dem magnetischen Zwischenabschnitt 126A, dem ersten axial magnetisierten Permanentmagneten 58A1, dem radialen Ringschenkel 52A"', dem axialen Ringsteg 50"' und dem anderen radialen Ringsteg 54A/B"'. Ferner wird ein in der Umlaufrichtung identischer zweiter magnetischer Haltekreis 112-2"' eingerichtet über den zweiten Polkörper 120A/B"', den Ankerabschnitt 68A"', den weichmagnetischen Zwischenabschnitt 126A, den zweiten Permanentmagneten 58A2 und den zweiten radialen Ringschenkel (mittleren Ringschenkel) 54A/B"'.

Mit anderen Worten kann die Magnetkraft der zwei Permanentmagnete 58A1, 58A2 miteinander kombiniert bzw. addiert werden, um bei nicht erregter Spulenanordnung 48A"' die Schaltmuffe 22A"' in der Schließ- bzw. Offenposition zu halten.

In dem mittleren Bild der Fig. 11 ist die Spulenanordnung 48A"' dann erregt, so dass sich ein magnetischer Kreis 110-1"' bildet, der die entgegengesetzte Richtung hat wie die magnetischen Haltekreise 112-1"', 112-2"'. Genauer gesagt verläuft der durch die Spulenanordnung 48A"' induzierte magnetische Kreis 110-1"' über den axialen Ringsteg 50"', den Ringschenkel 54A/B"', den zweiten Permanentmagneten 58A2, den Zwischenabschnitt 126A, den Ankerabschnitt 68A"', den Polkörper 66A"' und den zweiten Ringschenkel 52A"'.

Ferner wird aufgrund dieser Umkehrung des Magnetflusses über das Magnetgehäuse ein zweiter magnetischer Kreis 110-2"' eingerichtet, der über den ersten Permanentmagneten 58A1, den Zwischenabschnitt 126A, den Ankerabschnitt 68A"', den Polkörper 66A"' und den Ringschenkel 52A"' verläuft. Mit anderen Worten werden die Permanentmagnete 58A1, 58A2 bei Bestromung der Spulenanordnung 48A"' dazu verwendet, den Vorgang des Bewegens der Schaltmuffe 22"' zu unterstützen.

Die Schaltmuffe 22A"' mit dem Ankerabschnitt 68A"' bewegt sich folglich in der Fig. 11 nach links, so dass die Schaltmuffe 22A"' und der Kupplungskörper 26A"' in Eingriff gelangen, um die Welle mit dem zugeordneten Losrad zu verbinden.

Die Haltekreise 110-1"', 110-2"' bleiben dabei in ihrer Richtung erhalten, auch nachdem die Spulenanordnung 48A"' nicht mehr mit elektrischer Energie versorgt wird, wie es in Fig. 11 rechts dargestellt ist. Demzufolge wird die Schaltmuffe 22A"' in der Schließposition gehalten, und zwar unter Verwendung der Magnetkräfte beider Permanentmagnete 58A1, 58A2.

Fig. 12 zeigt den entsprechenden Vorgang beim Auslegen der Gangstufe. Die linke Darstellung der Fig. 12 entspricht dabei der rechten Darstellung von Fig. 11. In der mittleren Darstellung von Fig. 12 wird die Spulenanordnung 48A"' mit elektrischer Energie versorgt, jedoch so, dass die Richtung des Magnetflusses wiederum umgekehrt wird. Hierdurch werden wiederum die Kreise 112-1"' und 112-2"' eingerichtet, so dass über den axialen Luftspalt zwischen dem Ankerabschnitt 68A"' und dem Polkörper 120A/B"' Axialkräfte auf den Ankerabschnitt 68A"' ausgeübt werden, so dass die Schaltmuffe 22A"' in Richtung der Offenposition bewegt wird, die in Fig. 12 in der rechten Darstellung erreicht ist. Die rechte Darstellung der Fig. 12 entspricht wiederum der linken Darstellung der Fig. 11 und zeigt, wie auch ohne Erregung der Spulenanordnung 48A"' die magnetischen Haltekreise 112-1"', 112-2"' dafür sorgen, dass die Schaltmuffe 22A"' in der gezeigten Offenstellung verbleibt.

## Patentansprüche

1. Schaltkupplungsanordnung (10) für Kraftfahrzeuggetriebe (80), zum Verbinden einer Welle (12) mit einem daran gelagerten Drehkörper (14), insbesondere mit einem Losrad (14), wobei die Schaltkupplungsanordnung (10) aufweist:
- eine mit der Welle (12) drehfest verbundene Schaltmuffe (22), die an der Welle (12) zwischen einer Schließstellung und einer Offenstellung axial verschieblich gelagert ist und eine erste Schaltverzahnung (24) aufweist;
- einen mit dem Drehkörper (14) drehfest verbundenen Kupplungskörper (26), der eine zweite Schaltverzahnung (28) aufweist, in die die erste Schaltverzahnung (24) in Schließrichtung (30) axial eingeschoben werden kann, um den Drehkörper (14) in der Schließstellung mit der Welle (12) zu verbinden; und
- eine Aktuatoranordnung (40) zum axialen Verschieben der Schaltmuffe (22);
wobei
die Aktuatoranordnung (40) eine Elektromagnetanordnung (46) aufweist, die ansteuerbar ist, um die Schaltmuffe (22) axial zu verschieben, wobei die Elektromagnetanordnung (46) eine Permanentmagnetanordnung (56) und ein Magnetgehäuse (42) aufweist, die so angeordnet sind, dass sie mit einem magnetisierbaren Ankerabschnitt (68) der Schaltmuffe (22) in der Schließ-und/oder in der Offenstellung einen magnetischen Kreis (110, 112) bilden können, mittels dessen die Schaltmuffe (22) axial gehalten wird,
**dadurch gekennzeichnet, dass** die Permanentmagnetanordnung (56"') zwei axial magnetisierte Permanentmagnete (58A1, 58A2, 58B1, 58B2) aufweist, die entgegengesetzt gepolt sind.

2. Schaltkupplungsanordnung nach Anspruch 1, **dadurch gekennzeichnet, dass** zwischen den zwei axial magnetisierten Permanentmagneten (58A1, 58A2, 58B1, 58B2) ein weichmagnetischer Zwischenabschnitt (126A, 126B) angeordnet ist.

3. Schaltkupplungsanordnung nach einem der Ansprüche 1 bis 2, **dadurch gekennzeichnet, dass** das Magnetgehäuse (42) ringförmig ausgebildet ist und zwei radial nach innen gerichtete Ringschenkel (52, 54) aufweist, zwischen denen die Permanentmagnetanordnung (56) angeordnet ist.

4. Schaltkupplungsanordnung nach Anspruch 3, **dadurch gekennzeichnet, dass** eine Spulenanordnung (48) der Elektromagnetanordnung (46) zwischen den zwei Ringschenkeln (52, 54) angeordnet ist.

5. Schaltkupplungsanordnung nach Anspruch 4, **dadurch gekennzeichnet, dass** die Spulenanordnung (48A"', 48B"') in radialer Richtung versetzt gegenüber der Permanentmagnetanordnung (56A"', 56B"') zwischen den zwei Ringschenkeln (52A"', 52B"', 54A/B"') angeordnet ist.

6. Schaltkupplungsanordnung nach einem der Ansprüche 3 bis 5, **dadurch gekennzeichnet, dass** ein Ringschenkel (52) über einen ersten radialen Luftspalt (104) mit einem ersten Polkörper (66) magnetisch gekoppelt ist, der an dem Kupplungskörper (26) festgelegt ist.

7. Schaltkupplungsanordnung nach Anspruch 6, **dadurch gekennzeichnet, dass** der erste Polkörper (66) über einen ersten axialen Luftspalt (74) mit einem Ankerabschnitt (68) magnetisch gekoppelt ist, der an der Schaltmuffe (22) festgelegt ist.

8. Schaltkupplungsanordnung nach einem der Ansprüche 3 bis 7, **dadurch gekennzeichnet, dass** ein Ringschenkel (54') mit einem zweiten Polkörper (120) magnetisch gekoppelt ist, der über einen zweiten axialen Luftspalt (122) mit einem Ankerabschnitt (68') magnetisch gekoppelt ist, der an der Schaltmuffe (22') festgelegt ist.

9. Schaltkupplungsanordnung nach Anspruch 8, **dadurch gekennzeichnet, dass** der zweite Polkörper (120) drehfest mit der Welle (12) verbunden ist und über einen radialen Luftspalt mit dem Ringschenkel (54') magnetisch gekoppelt ist.

10. Schaltkupplungsanordnung nach einem der Ansprüche 1 bis 9, **dadurch gekennzeichnet, dass** ein zwischen zwei Permanentmagneten (58A1, 58A2, 58B1, 58B2) der Permanentmagnetanordnung (56A"', 56B"') angeordneter weichmagnetscher Zwischenabschnitt (126A, 126B) über einen dritten radialen Luftspalt mit einem Ankerabschnitt (68"') magnetisch gekoppelt ist, der an der Schaltmuffe (22"') festgelegt ist.

11. Schaltkupplungsanordnung nach einem der Ansprüche 1 bis 10, **dadurch gekennzeichnet, dass** die Elektromagnetanordnung (46) dazu ausgelegt ist, einen ersten und einen zweiten magnetischen Kreis (110, 112) einzurichten, wobei bei Einrichtung des ersten magnetischen Kreises (110) auf einen Ankerabschnitt (68) der Schaltmuffe (22) eine erste Magnetkraft (114) ausgeübt wird, die die Schaltmuffe (22) in Schließrichtung (30) verschiebt.

12. Schaltkupplungsanordnung nach Anspruch 11, **dadurch gekennzeichnet, dass** bei Einrichtung des zweiten magnetischen Kreises (112) auf einen Ankerabschnitt (68) der Schaltmuffe (22) eine zweite Magnetkraft (116) ausgeübt wird, die die Schaltmuffe (22) entgegen der Schliessrichtung (30) verschiebt.

13. Schaltkupplungsanordnung nach einem der Ansprüche 1, 2, 5, 10, **dadurch gekennzeichnet, dass** die Elektromagnetanordnung (46A"', 46B"') dazu ausgelegt ist, in der Schließ- und/oder in der Öffnungsstellung der Schaltmuffe (22"') einen ersten magnetischen Haltekreis (112-1"') über einen von zwei Permanentmagneten (58A1) und gleichzeitig einen parallelen zweiten magnetischen Haltekreis (112-2"') über den zweiten Permanentmagneten (58A2) einzurichten.

14. Schaltkupplungspaket (10"; 10"') mit einer ersten und einer zweiten Schaltkupplungsanordnung nach einem der Ansprüche 1 bis 13, **dadurch gekennzeichnet, dass** die erste Schaltkupplungsanordnung dazu ausgelegt ist, die Welle mittels einer ersten Schaltmuffe (22A"; 22A"') mit einem ersten Drehkörper (14A) zu verbinden und wobei die zweite Schaltkupplungsanordnung dazu ausgelegt ist, die Welle (12) mittels einer zweiten Schaltmuffe (22B"; 22B"') mit einem zweiten Drehkörper (14B) zu verbinden.

15. Verfahren zum Einrücken einer Gangstufe eines Getriebes (80), insbesondere eines Kraftfahrzeuggetriebes (80), und zwar durch axiales Verschieben einer Schaltmuffe (22) in Bezug auf einen Kupplungskörper (26) mittels einer Elektromagnetanordnung (46), wobei die Elektromagnetanordnung (46) ein Magnetgehäuse (42), eine elektrische Spulenanordnung (48) und einen Permanentmagneten (58) aufweist, mit den Schritten, die Spulenanordnung (48) zu bestromen, so dass ein erster magnetischer Kreis (110) über das Magnetgehäuse (42), den Permanentmagneten (58), einen magnetisierbaren Ankerabschnitt (68) der Schaltmuffe (22), einen ersten Polkörper (66) des Kupplungskörpers (26) und einen axialen Luftspalt (74) zwischen dein Ankerabschnitt (68) und dem ersten Polkörper (66) eingerichtet wird, und bei oder nach Schließen des Luftspaltes (74) die Bestromung zu reduzieren, wobei der Permanentmagnet (58) einen magnetischen Haltefluss über den ersten magnetischen Kreis (110) aufrechterhält, um die Schaltmuffe (22) axial in der eingerückten Position zu halten.

16. Verfahren zum Ausrücken einer Gangstufe eines Getriebes (80), insbesondere eines Kraftfahrzeuggetriebes (80), und zwar durch axiales Verschieben einer Schaltmuffe (22) in Bezug auf einen Kupplungskörper (26) mittels einer Elektromagnetanordnung (46), wobei die Elektromagnetanordnung (46) ein Magnetgehäuse (42), eine elektrische Spulenanordnung (48) und einen Permanentmagneten (58) aufweist, und wobei die Schaltmuffe (22) mittels eines von dem Permanentmagneten (58) erzeugten Halteflusses über einen ersten magnetischen Kreis (110) axial gehalten ist, mit den Schritten, die Spulenanordnung (48) zu bestromen, so dass ein resultierender Fluss in einem zweiten magnetischen Kreis (112) ausgebildet wird, der über das Magnetgehäuse (42), den Permanentmagneten (58) und einen magnetisierbaren Ankerabschnitt (68) der Schaltmuffe (22) eingerichtet wird und mittels dessen die Schaltmuffe (22) axial in der ausgerückten Position gehalten werden kann.

## Claims

1. A clutch arrangement (10) for a motor vehicle transmission (80), for connecting a shaft (12) to a rotational element (14), in particular to a loose wheel (14), wherein the clutch arrangement (10) has:
- a sliding sleeve (22) which is connected in a rotationally fixed fashion to the shaft (12) and is mounted in an axially displaceable fashion on the shaft (12) between a closed position and an open position and has a first sliding toothing (24);
- a clutch element (26) which is connected in a rotationally fixed fashion to the rotational element (14) and has a second sliding toothing (28) into which the first sliding toothing (24) can be inserted axially in the closing direction (30) in order to connect the rotational element (14) to the shaft (12) in the closed position; and
- an actuator arrangement (40) for axially sliding the sliding sleeve (22); wherein
the actuator arrangement (40) has an electromagnet arrangement (46) which can be actuated in order to slide the sliding sleeve (22) axially, wherein the electromagnet arrangement (46) has a permanent magnet arrangement (56) and a magnet housing (42) which are arranged in such a way that with a magnetizable armature section (68) of the sliding sleeve (22) in the closed and/or open position they can form a magnetic circuit (110, 112) by means of which the sliding sleeve (22) is held axially,
**characterized in that**
the permanent magnet arrangement (56"') has two axially magnetized permanent magnets (58A1, 58A2, 58B1, 58B2) which are oppositely poled.

2. The clutch arrangement as claimed in claim 1, **characterized in that** a soft-magnetic intermediate section (126A, 126B) is arranged between the two axially magnetized permanent magnets (58A1, 58A2, 58B1, 58B2).

3. The clutch arrangement as claimed in one of claims 1 to 2, **characterized in that** the magnet housing (42) is of annular design and has two radially inwardly directed annular limbs (52, 54) between which the permanent magnet arrangement (56) is arranged.

4. The clutch arrangement as claimed in claim 3, **characterized in that** a coil arrangement (48) of the electromagnet arrangement (46) is arranged between the two annular limbs (52, 54).

5. The clutch arrangement as claimed in claim 4, **characterized in that** the coil arrangement (48A"', 48B"') is arranged offset in the radial direction with respect to the permanent magnet arrangement (56A"', 56B"') between the two annular limbs (52A"', 52B"', 54A/B"').

6. The clutch arrangement as claimed in one of claims 3 to 5, **characterized in that** an annular limb (52) is magnetically coupled across a first radial air gap (104) to a first pole element (66) which is fixed to the clutch element (26).

7. The clutch arrangement as claimed in claim 6, **characterized in that** the first pole element (66) is magnetically coupled across a first axial air gap (74) to an armature section (68) which is fixed to the sliding sleeve (22).

8. The clutch arrangement as claimed in one of claims 3 to 7, **characterized in that** an annular limb (54') is magnetically coupled to a second pole element (120) which is magnetically coupled across a second axial air gap (122) to an armature section (68') which is fixed to the sliding sleeve (22').

9. The clutch arrangement as claimed in claim 8, **characterized in that** the second pole element (120) is connected in a rotationally fixed fashion to the shaft (12) and is magnetically coupled across a radial air gap to the annular limb (54').

10. The clutch arrangement as claimed in one of claims 1 to 9, **characterized in that** a soft-magnetic intermediate section (126A, 126B) which is arranged between two permanent magnets (58A1, 58A2, 58B1, 58B2) of the permanent magnet arrangement (56A"', 56B"') is magnetically coupled across a third radial air gap to an armature section (68"') which is fixed to the sliding sleeve (22"').

11. The clutch arrangement as claimed in one of claims 1 to 10, **characterized in that** the electromagnet arrangement (46) is configured to set up a first and a second magnetic circuit (110, 112), wherein, when the first magnetic circuit (110) is set up, a first magnetic force (114) is applied to an armature section (68) of the switching sleeve (22) and said magnetic force (114) slides the sliding sleeve (22) in the closing direction (30).

12. The clutch arrangement as claimed in claim 11, **characterized in that**, when the second magnetic circuit (112) is set up, a second magnetic force (116) is applied to an armature section (68) of the sliding sleeve (22), and said magnetic force (116) slides the sliding sleeve (22) in the opposite direction to the closing direction (30).

13. The clutch arrangement as claimed in one of claims 1, 2, 5, 10, **characterized in that** the electromagnet arrangement (46A"', 46B"') is configured to set up, in the closed and/or opened position of the sliding sleeve (22"'), a first magnetic holding circuit (112-1"') by means of one of two permanent magnets (58A1) and at the same time a parallel second magnetic holding circuit (112-2"') by means of the second permanent magnet (58A2).

14. A clutch assembly (10"; 10"') having a first and a second clutch arrangement as claimed in one of claims 1 to 13, **characterized in that** the first clutch arrangement is configured to connect the shaft by means of a first sliding sleeve (22A"; 22A"') to a first rotational element (14A), and wherein the second clutch arrangement is configured to connect the shaft (12) to a second rotational element (14B) by means of a second sliding sleeve (22B", 22B"').

15. A method for engaging a gearspeed of a transmission (80), in particular of a motor vehicle transmission (80), specifically by axially sliding a sliding sleeve (22) with respect to a clutch element (26) by means of an electromagnet arrangement (46), wherein the electromagnet arrangement (46) has a magnet housing (42), an electric coil arrangement (48) and a permanent magnet (58), having the steps of energizing the coil arrangement (48) so that a first magnetic circuit (110) is set up across the magnet housing (42), the permanent magnet (58), a magnetizable armature section (68) of the sliding sleeve (22), a first pole element (66) of the clutch element (26) and an axial air gap (74) between the armature section (68) and the first pole element (66), and of reducing the energization when or after the air gap (74) closes, wherein the permanent magnet (58) maintains a magnetic holding flux across the first magnetic circuit (110) in order to hold the sliding sleeve (22) axially in the engaged position.

16. A method for disengaging a gearspeed of a transmission (80), in particular of a motor vehicle transmission (80), specifically by axially sliding a sliding sleeve (22) with respect to a clutch element (26) by means of an electromagnet arrangement (46), wherein the electromagnet arrangement (46) has a magnet housing (42), an electric coil arrangement (48) and a permanent magnet (58), and wherein the sliding sleeve (22) is held axially by means of a holding flux which is generated by the permanent magnet (58) across a first magnetic circuit (110), having the steps of energizing the coil arrangement (48) so that a resulting flux is formed in a second magnetic circuit (112) which is set up across the magnet housing (42), the permanent magnet (58) and a magnetizable armature section (68) of the sliding sleeve (22) and by means of which the sliding sleeve (22) can be held axially in the disengaged position.

## Revendications

1. Arrangement d'accouplement débrayable (10) pour boîte de vitesses de véhicule automobile (80), destiné à relier un arbre (12) avec un corps rotatif (14) logé dans celui-ci, notamment avec une roue libre (14), l'arrangement d'accouplement débrayable (10) présentant:
- un manchon de commutation (22) relié en rotation solidaire avec l'arbre (12), lequel est monté sur l'arbre (12) de manière à pouvoir coulisser dans le sens axial entre une position fermée et une position ouverte et présente une première denture de commutation (24);
- un corps d'accouplement (26) relié en rotation solidaire avec le corps rotatif (14), lequel présente une deuxième denture de commutation (28) dans laquelle la première denture de commutation (24) peut être insérée axialement dans le sens de la fermeture (30) afin de relier, en position fermée, le corps rotatif (14) avec l'arbre (12); et
- un arrangement actionneur (40) pour faire coulisser le manchon de commutation (22) dans le sens axial;
l'arrangement actionneur (40) présentant un arrangement d'électroaimants (46) qui peut être commandé pour faire coulisser le manchon de commutation (22) dans le sens axial, l'arrangement d'électroaimants (46) présentant un arrangement d'aimants permanents (56) et un boîtier magnétique (42) qui sont disposés de telle sorte qu'avec une section d'induit (68) magnétisable du manchon de commutation (22), ils peuvent, en position fermée et/ou en position ouverte, former un circuit magnétique (110, 112) au moyen duquel le manchon de commutation (22) est maintenu dans le sens axial,
**caractérisé en ce que** l'arrangement d'aimants permanents (56"') présente deux aimants permanents (58A1, 58A2, 58B1, 58B2) magnétisés dans le sens axial qui présentent des polarités inverses.

2. Arrangement d'accouplement débrayable selon la revendication 1, **caractérisé en ce qu'**une section intermédiaire magnétique douce (126A, 126B) est disposée entre les deux aimants permanents (58A1, 58A2, 58B1, 58B2) magnétisés dans le sens axial.

3. Arrangement d'accouplement débrayable selon l'une des revendications 1 à 2, **caractérisé en ce que** le boîtier magnétique (42) est réalisé en forme d'anneau et présente deux branches d'anneau (52, 54) orientées radialement vers l'intérieur entre lesquelles est disposé l'arrangement d'aimants permanents (56).

4. Arrangement d'accouplement débrayable selon la revendication 3, **caractérisé en ce qu'**un arrangement de bobines (48) de l'arrangement d'électroaimants (46) est disposé entre les deux branches d'anneau (52, 54).

5. Arrangement d'accouplement débrayable selon la revendication 4, **caractérisé en ce que** l'arrangement de bobines (48A"', 48B"') est disposé entre les deux branches d'anneau (52A"', 52B"', 54A/B"') en étant décalé dans le sens radial par rapport à l'arrangement d'aimants permanents (56A"', 56B"').

6. Arrangement d'accouplement débrayable selon l'une des revendications 3 à 5, **caractérisé en ce qu'**une branche d'anneau (52) est couplée magnétiquement par le biais d'un premier entrefer radial (104) avec un premier noyau polaire (66) qui est fixé au corps d'accouplement (26).

7. Arrangement d'accouplement débrayable selon la revendication 6, **caractérisé en ce que** le premier noyau polaire (66) est couplé magnétiquement par le biais d'un premier entrefer axial (74) avec une section d'induit (68) qui est fixée au manchon de commutation (22).

8. Arrangement d'accouplement débrayable selon l'une des revendications 3 à 7, **caractérisé en ce qu'**une branche d'anneau (54') est couplée magnétiquement avec un deuxième noyau polaire (120), lequel est couplé magnétiquement par le biais d'un deuxième entrefer axial (122) avec une section d'induit (68') qui est fixée au manchon de commutation (22').

9. Arrangement d'accouplement débrayable selon la revendication 8, **caractérisé en ce que** le deuxième noyau polaire (120) est relié en rotation solidaire avec l'arbre (12) et est couplé magnétiquement avec la branche d'anneau (54') par le biais d'un entrefer radial.

10. Arrangement d'accouplement débrayable selon l'une des revendications 1 à 9, **caractérisé en ce qu'**une section intermédiaire (126A, 126B) magnétique douce disposée entre deux aimants permanents (58A1, 58A2, 58B1, 58B2) de l'arrangement d'aimants permanents (56A"', 56B"') est couplée magnétiquement par le biais d'un troisième entrefer radial avec une section d'induit (68"') qui est fixée au manchon de commutation (22"').

11. Arrangement d'accouplement débrayable selon l'une des revendications 1 à 10, **caractérisé en ce que** l'arrangement d'électroaimants (46) est conçu pour établir un premier et un deuxième circuits magnétiques (110, 112), une première force magnétique (114), laquelle fait coulisser le manchon de commutation (22) dans le sens de la fermeture (30), étant exercée sur une section d'induit (68) du manchon de commutation (22) lors de l'établissement du premier circuit magnétique (110).

12. Arrangement d'accouplement débrayable selon la revendication 11, **caractérisé en ce que** lors de l'établissement du deuxième circuit magnétique (112), une deuxième force magnétique (116) qui fait coulisser le manchon de commutation (22) dans le sens opposé à la fermeture (30) est exercée sur une section d'induit (68) du manchon de commutation (22).

13. Arrangement d'accouplement débrayable selon l'une des revendications 1, 2, 5, 10, **caractérisé en ce que** l'arrangement d'électroaimants (46A"', 46B"') est conçu pour, en position fermée et/ou ouverte du manchon de commutation (22"'), établir un premier circuit de maintien magnétique (112-1"') par le biais d'un parmi deux aimants permanents (58A1) et simultanément un deuxième circuit de maintien magnétique (112-2"') en parallèle par le biais du deuxième aimant permanent (58A2).

14. Bloc d'accouplement débrayable (10", 10"') comprenant un premier et un deuxième arrangement d'accouplement débrayable selon l'une des revendications 1 à 13, **caractérisé en ce que** le premier arrangement d'accouplement débrayable est conçu pour relier l'arbre au moyen d'un premier manchon de commutation (22A", 22A"') avec un premier corps rotatif (14A) et le deuxième arrangement d'accouplement débrayable étant conçu pour relier l'arbre (12) au moyen d'un deuxième manchon de commutation (22B", 22B"') avec un deuxième corps rotatif (14B).

15. Procédé pour engager un rapport d'une boîte de vitesses (80), notamment d'une boîte de vitesses de véhicule automobile (80), et ce par coulissement axial d'un manchon de commutation (22) par rapport à un corps d'accouplement (26) au moyen d'un arrangement d'électroaimants (46), l'arrangement d'électroaimants (46) présentant un boîtier magnétique (42), un arrangement de bobines (48) électrique et un aimant permanent (58), comprenant les étapes d'alimentation électrique de l'arrangement de bobines (48) de manière à établir un premier circuit magnétique (110) par le boîtier magnétique (42), l'aimant permanent (58), une section d'induit magnétisable (68) du manchon de commutation (22), un premier noyau polaire (66) du corps d'accouplement (26) et un entrefer axial (74) entre la section d'induit (68) et le premier noyau polaire (66), et de réduction de l'alimentation électrique lors de ou après la fermeture de l'entrefer (74), l'aimant permanent (58) maintenant un flux de maintien magnétique par le biais du premier circuit magnétique (110) afin de maintenir le manchon de commutation (22) dans le sens axial dans la position engagée.

16. Procédé pour désengager un rapport d'une boîte de vitesses (80), notamment d'une boîte de vitesses de véhicule automobile (80), et ce par coulissement axial d'un manchon de commutation (22) par rapport à un corps d'accouplement (26) au moyen d'un arrangement d'électroaimants (46), l'arrangement d'électroaimants (46) présentant un boîtier magnétique (42), un arrangement de bobines (48) électrique et un aimant permanent (58), et le manchon d'accouplement (22) étant maintenu dans le sens axial par le biais d'un premier circuit magnétique (110) au moyen d'un flux de maintien généré par l'aimant permanent (58), comprenant les étapes d'alimentation électrique de l'arrangement de bobines (48) de manière à former un flux résultant dans un deuxième circuit magnétique (112) qui est établi par le boîtier magnétique (42), l'aimant permanent (58) et une section d'induit (68) magnétisable du manchon de commutation (22) et au moyen duquel le manchon de commutation (22) peut être maintenu dans le sens axial dans la position désengagée.
